# EUROPEAN PATENT SPECIFICATION

(11) **EP 1 852 931 B1**
(45) Date of publication and mention of the grant of the patent: **21.01.2009**
(21) Application number: 07107350.6
(22) Date of filing: 02.05.2007
(51) Int. Cl.: H01M 8/04, H01M 8/02

(54) **Separator for Fuel Cell**
Abteiler für eine Brennstoffzelle
Séparateur de pile à combustible

(30) Priority: 03.05.2006 KR 20060040221
(43) Date of publication of application: 07.11.2007
(73) Proprietor: Samsung SDI Co., Ltd., Suwon-si, Gyeonggi-do (KR)
(72) Inventor: Lee, Joon-hyung, Gongse-ri, Koheung-eup, Yongin-si,Gyeonggi-do (KR); Na, Yong-seung, Gongse-ri, Koheung-eup, Yongin-si, Gyeonggi-do (KR)
(74) Representative: Grey, Ian Michael

(56) References cited:
- EP-A- 1 533 859
- EP-A- 1 732 154
- WO-A-20/07069440
- JP-A- 2000 228 207
- JP-A- 2002 025 586
- JP-A- 2003 323 905

## Description

The present invention relates to a fuel cell, and more particularly, to a separator for a fuel cell.

A fuel cell is classified into a polymer electrolyte membrane fuel cell (PEMFC) and a direct methanol fuel cell (DMFC); a phosphoric acid fuel cell (PAFC); a molten carbon fuel cell (MCFC); a solid oxide fuel cell (SOFC); and so on. These fuel cells operate generally in the same principle, but they are different in the type of fuel, catalysts, electrolytes, and so on. In general, the fuel cell is a power generating system that directly transforms chemical energy into electric energy using an electrochemical reaction between H₂ (hereinafter "hydrogen") and O₂ (hereinafter "oxygen.") In supplying hydrogen to a fuel cell system, hydrogen can be directly used in the reaction, or hydrocarbons such as methanol, ethanol, natural gas can be reformed to provide hydrogen. Further, in supplying oxygen to the fuel cell system, oxygen can be directly used, or air containing oxygen can be supplied. In supplying oxygen, an air pump or the like may be used. Meanwhile, the direct methanol fuel cell (DMFC) systems use a mixture of methanol and water as the fuel.

It is known from JP 2000 228207A to provide a separator for use in a fuel cell, comprising: a plate having a first edge and a second edge opposite from the first edge; an inlet formed adjacent to the first edge; an outlet formed adjacent to the second edge; and a plurality of ribs formed on a surface of the plate, the ribs being positioned between the inlet and the outlet and extending in a direction from the first edge to the second edge, thereby defining channels therebetween, each of the ribs comprising a first end portion adjacent to the inlet and a second end portion adjacent to the outlet, wherein at least one of the second end portions of the ribs comprises at least one surface which does not extend parallel to a plane lying perpendicular to the direction in which the ribs extend.

A separator for use in a fuel cell according to the invention is characterised in that the surface forms an angle with the plane lying perpendicular to the direction, said angle being between 35° and 55° and in that the plate comprises a recess formed on the surface of the plate, and the plurality of ribs are formed within the recess, the recess comprising a first recessed portion permitting fluid communication between the inlet and the channels and a second recessed portion permitting fluid communication between the channels and the outlet, and wherein the second recessed portion narrows towards the outlet such that a fluid from at least one of the channels flows toward the outlet the inlet being positioned higher than the outlet, the second recessed portion comprising at least one surface substantially not parallel to the surface of the plate, and wherein the at least one surface is generally not parallel to the plane lying perpendicular to the direction.

The first recessed portion may widen as it extends from the inlet toward the channels. The at least part of the second recessed portion may be coated with a hydrophilic material. At least one of the channels may be coated with a hydrophilic material.

The separator may further comprise another plurality of ribs formed on another surface of the plate, the other plurality of ribs being positioned between the inlet and the outlet and extending in a direction from the first edge to the second edge, thereby defining channels therebetween, each of the other plurality of ribs comprising a first end portion adjacent to the inlet and a second end portion adjacent to the outlet, wherein at least one of the second end portions of the other plurality of ribs comprises at least one surface generally not parallel to a surface perpendicular to the direction.

Another aspect of the invention provides a fuel cell comprising: an electrode plate; and the separator described above, the separator being attached to the electrode plate with the surface of the plate facing the electrode.

Yet another aspect of the invention provides a method of operating the fuel cell described above. The method comprises: orienting the fuel cell such that the inlet is positioned higher than the outlet; supplying a reactant through the inlet; activating the electrode to form a liquid product; and draining the liquid product through the outlet
Another aspect of the invention provides a fuel cell comprising: a first electrode plate; a second electrode plate; and the separator described above, the separator being interposed between the first and second electrode plates and attached to the first and second electrode plates.

Yet another aspect of the invention provides an apparatus comprising the separator described above, wherein the apparatus is selected from the group consisting of a self-contained fuel cell system, an electronic or electrical device comprising a fuel cell, and a transportation vehicle comprising a fuel cell.

In some embodiments, the channel is coated with a hydrophilic material, and the outlet header is coated with a hydrophilic material. In some embodiments, the plate faces a cathode electrode into which the oxidant is introduced, and the products include water. In some embodiments, the outlet header is formed by partially cutting out the surface of the plate at predetermined depth from circumference of the outlet to the channel, and the height of the rib is equal to the depth of the outlet header. In some embodiments, the inlet header is formed by partially cutting out the surface of the plate at predetermined depth from circumference of the inlet to the channel.

These and other aspects and advantages of the invention will become apparent and more readily appreciated from the following description of certain embodiments, taken in conjunction with the accompanying drawings of which:
FIG. 1 is a plan view of a cathode separator according to an embodiment;
FIG. 2a is a perspective view of the cathode separator according to an embodiment;
FIGs. 2b to 2e are perspective views of second end portions of ribs according to another embodiment;
FIG. 3 is a plan view of a cathode separator according to another embodiment;
FIG. 4 is a schematic cross-sectional view of a unit cell; and
FIG. 5 is a plan view of a cathode separator used in the fuel cell of FIG 4.

Hereinafter, various embodiments of the present invention will be described with reference to accompanying drawings, wherein like numerals refer to like elements and repetitive descriptions will be avoided as necessary. In the illustrated embodiments, the shape and size of the elements and features shown in the drawings may be exaggerated.

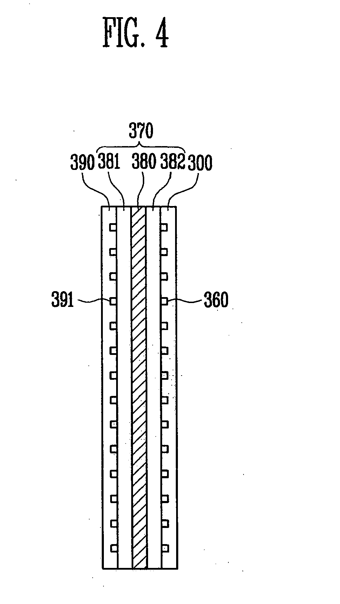

FIG. 4 is a schematic cross-sectional view of a unit fuel cell configuration. Referring to FIG. 4, the unit cell includes a membrane electrode assembly 370, a cathode separator 300 and an anode separator 390. In general, the membrane electrode assembly 370 includes an anode electrode 381, a cathode electrode 382 and an electrolyte membrane 380 interposed between the anode and cathode electrodes 381 and 382.

The cathode separator 300 is placed to contact the cathode electrode 382 and formed with air flow channels 360, through which oxygen is to be supplied to the cathode electrode 382. The electrochemical reaction of the fuel cell generates water at the cathode electrode 382. The water produced in the reaction flows along the channels 360 of the cathode separator 300 and is discharged to the outside.

The anode separator 390 is placed to contact the anode electrode 381 and formed with channels 391, through which fuel is supplied to the anode electrode 381. The reaction of the fuel cell at the anode electrode 381 generates carbon dioxide or the like, which flows along the channels 391 of the anode separator 390 and is discharged to the outside.

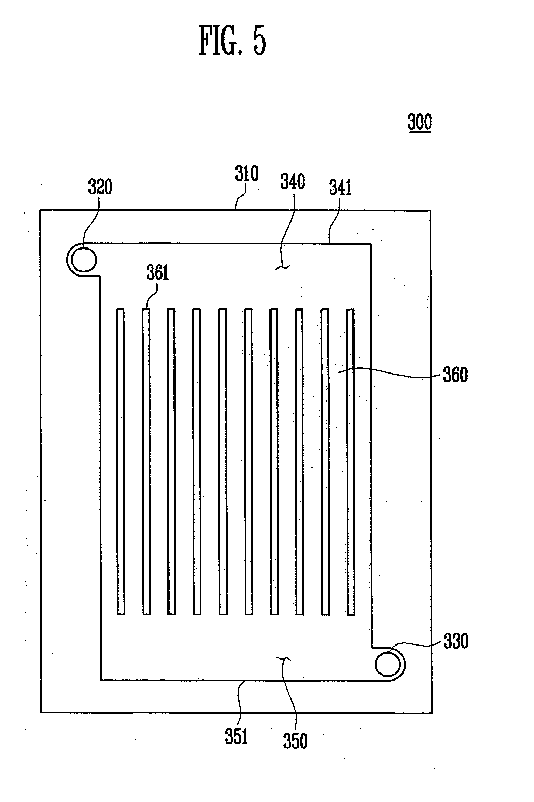

FIG. 5 is a plan view of one configuration of the cathode separator 300. Referring to FIG. 5, the cathode separator 300 includes an inlet 320, an outlet 330 and a plurality of ribs 361 provided in a recess formed in the cathode separator 300. In the illustrated configuration, the recess is defined by four edges including the top edge 341 and the bottom edge 351. The top edge 341 is generally parallel to the top edge 310 of the cathode separator 300. Air is introduced to the recessed space through the inlet 320 and flows downward along the channels 360 formed by ribs 361 via a space referred to as inlet header 340. Then, air passing through the channels 360 is discharged through the outlet 330 via another space referred to as outlet header 350, which is generally parallel with the top edge 310 of the cathode electrode 300.

Further, as described above, water produced in the cathode electrode 382 (refer to FIG. 4) falls to the outlet header 350 along the channels 360 due to its gravity and is discharged to the outside through the outlet 330. However, because the bottom edge 351 is in parallel with the top edge 310, some water falling to the outlet header 350 may not be easily drained through the outlet 330. Therefore, some water may be remained in the outlet header 350 and may obstruct air flow through the channels 360. Such obstruction may interfere supply of air to the cathode electrode 382 (refer to FIG. 4) and may further affect the power generation efficiency of the fuel cell system.

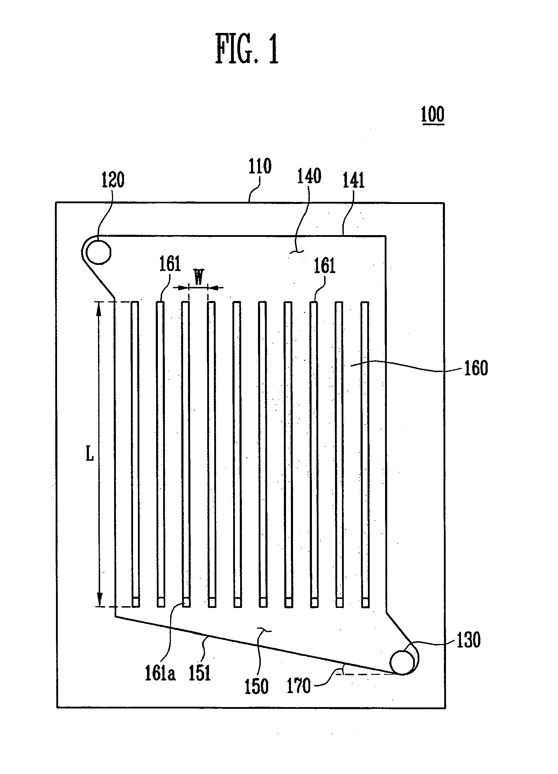

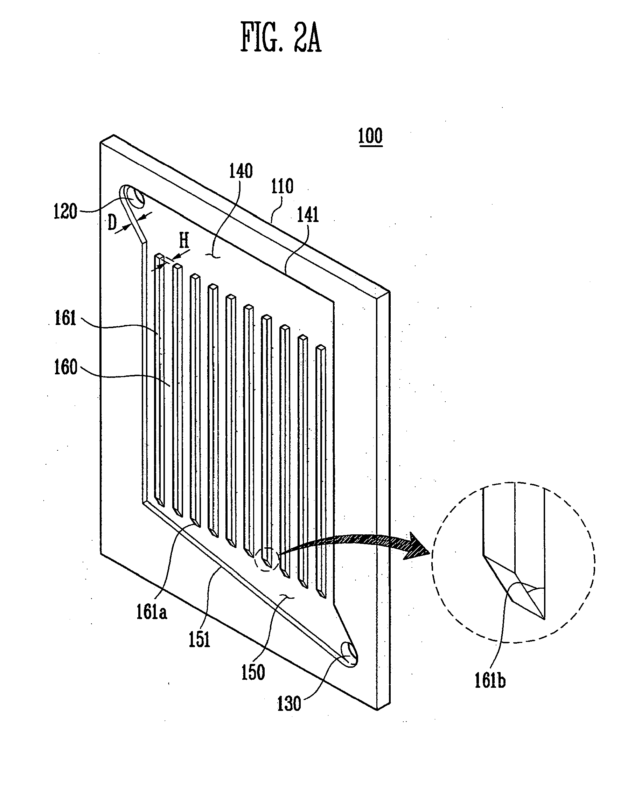

In addition, water produced in the cathode electrode 300 sometimes does not flow through the channels 360 and may stay at lower end portions of the channels 360 because of surface tension between the water drops and the surfaces of the channels 360. The water staying in the channels 360 interferes with smooth supply of air to various areas of the cathode electrode 300, thereby deteriorating the power generation efficiency of the fuel cell system. FIG. 1 is a plan view of a cathode separator according to an embodiment. FIG. 2a is a perspective view of the cathode separator of FIG. 1. Referring to FIGS. 1 and 2a, a cathode separator 100 according to an embodiment has a plate 110 that includes a recess on a surface thereof. The plate 100 includes an inlet 120, an inlet header 140, a plurality of channels 160, a plurality of ribs 161, an outlet header 150 and an outlet 130 in the recess. The inlet 120 is positioned at an upper left corner of the recess, as shown in FIG. 1. The inlet 120 is configured to penetrate the plate 110. It will be appreciated that the configuration and position of the inlet 120 can be varied depending on the design of the separator.

The inlet header 140 refers to a space on an upper portion of the recess of the plate 110. The inlet header 140 has a bottom surface recessed into the plate 110. The bottom surface may be formed by partially cutting out the surface of the plate 110 around the inlet 120 to a predetermined depth. The predetermined depth may be between about 1mm and about 2mm. A top edge 141 of the inlet header 140 is substantially parallel to a top edge of the plate 110.

The plurality of ribs 161 are positioned below the inlet header 140 in substantially central region of the recess. The ribs 161 extend substantially parallel to one another and substantially perpendicular to the top edge 141 of the inlet header 140. The ribs 161 protrude from the bottom surface of the recess of the plate 110. In one embodiment, the ribs 161 are formed in parallel to one another at a predetermined interval. The predetermined interval W may be between about 0.8mm and about 2mm. A space between the adjacent ribs 161 forms a channel through which air and water can flow. The ribs 161 may have a height H (FIG. 2a) approximately equal to a depth D (FIG. 2a) of the inlet header 140 or the recess. In one embodiment, the ribs 161 have a height between about 1mm and about 2mm and a length L (FIG. 1) between about 32mm and about 36mm. Each of the illustrated ribs 161 has an upper end immediately below the inlet header 140 and a lower end opposite from the upper end. In one embodiment, the ribs 161 includes a sloping end 161a at the lower end, as shown in FIG. 2a. The sloping end 161a has an inclined surface having a predetermined gradient toward the recessed surface of the plate 110. The sloping end 161a of the rib 161 serves to minimize a surface tension of water. In addition, the sloping end 161a has a predetermined angle 161b (FIG. 2a) of inclination with respect to the bottom surface of the plate, for example, 35° to 55°, optionally 40° to 50°. The predetermined angle may be one selected from 35°, 36°, 37°, 38°, 39°, 40°, 41°, 42°, 43°, 44°, 45°, 46°, 47°, 48°, 49°, 50°, 51°, 51°, 52°, 53°, 54°, and 55°.

The outlet 130 is positioned at a lower right corner of the recess. The outlet 130 is configured to penetrate the plate 110. It will be appreciated that the configuration and position of the outlet 130 can be varied depending on the design of the separator. Like the inlet header 140, the outlet header 150 is recessed into the plate 100. In one embodiment, the outlet header 140 may be formed by partially cutting out the surface of the plate 110 around the outlet 130 to a predetermined depth. The predetermined depth may be between about 1mm and about 2mm.

The outlet header 140 is configured to be in fluid communication with the channels 160. In the illustrated embodiment, the outlet header 150 serves to collect water discharged from the channels 160 into the outlet 130. To enhance the collection of the outlet header 150, a bottom edge 151 of the outlet header 150 is formed at a predetermined angle 170 to a bottom edge of the plate 110 toward the outlet 130. Further, the outlet header 150 has an upper width facing the channel 160 and a lower width facing the outlet 130, in which the upper width is wider than the lower width. In the illustrated embodiment, the angle 170 may be optionally determined for allowing water discharged from the channel 160 to easily flow toward the outlet 130 along the bottom edge 151 of the outlet header 150. In one embodiment, the angle 170 may be between 30° and 45°. The angle 170 may be selected from 30°, 31°, 32°, 33°, 34°, 35°, 36°, 37°, 38°, 39°, 40°, 41°, 42°, 43°, 44°, and 45°.

In certain embodiments, a surface of the outlet header 150 may be coated with a hydrophilic material such as titanium dioxide, a silane coupling agent, a sealant, or the like. Such a hydrophilic material can also be applied to the channels 160.
The cathode separator 100 according to an embodiment operates as follows. Air introduced through the inlet 120 is distributed to the channels 160 via the inlet header 140. Then, air is supplied from each channel 160 to the cathode electrode 382 (FIG. 4) contacting the cathode separator 100. On the surface of the cathode electrode 382, oxygen in the air is reduced and water is produced. Then, water flows to the outlet header 150 along the channel 160 because of gravity. Because the ribs 161 have the sloping ends 161a having inclined surfaces at the lower parts thereof, water can smoothly flow to the outlet header 150 without being retained at the lower parts of the ribs 161. Further, because the bottom edge 151 of the outlet header 150 is formed at a predetermined angle 170 with respect to the bottom edge of the plate 110, water collected in the outlet header 150 can smoothly flow down along the bottom edge 151 of the outlet header 150 and can be discharged to the outside through the outlet 130. In certain embodiments where the surface of the outlet header 150 is coated with a hydrophilic material, water can more smoothly flow and be discharged.

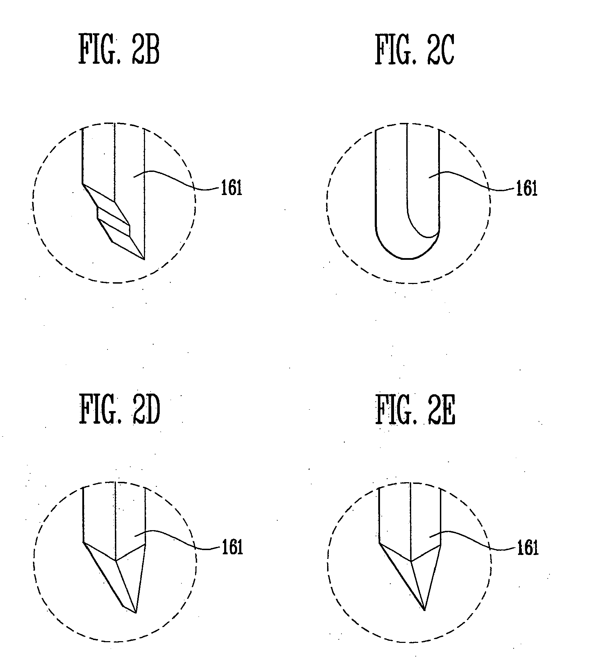

FIGs. 2b to 2e are perspective views of second end portions of ribs according to another embodiment. Referring to FIG. 2b, at least one of the second end portions of the ribs 121 according to another embodiment may have a step portion. Referring to FIG. 2c, at least one of the second end portions of the ribs 121 according to another embodiment may have a rounded surface. Referring to FIG. 2d, at least one of the second end portions of the ribs 121 according to another embodiment may be tapered such that the lateral surface narrows toward the second edge. Furthermore, referring to FIG. 2e, at least one of the second end portions of the ribs 121 according to another embodiment may have triangle shape lateral surface. Here, the triangle shape may comprise a perpendicular triangle.

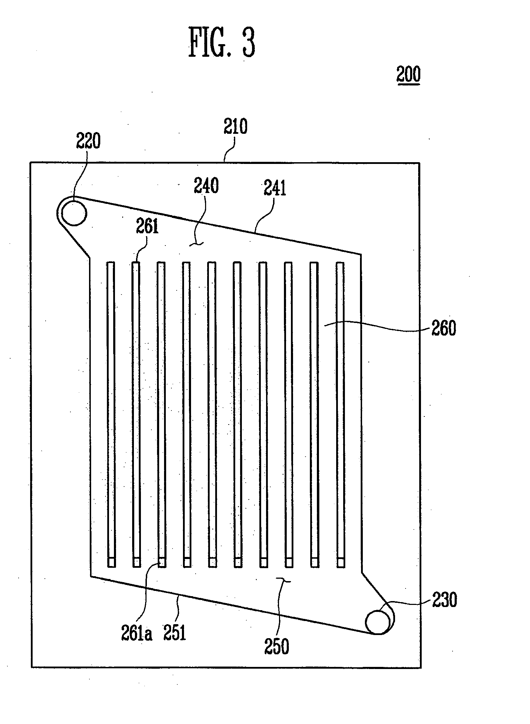

FIG. 3 is a plan view of a cathode separator according to another embodiment. Referring to FIG. 3, a cathode separator 200 according to this embodiment has a plate 210 that includes an inlet 220, an inlet header 240, a channel 260, a rib 261, an outlet header 250 and an outlet 230. Here, the cathode separator 200 of FIG. 3 has a configuration similar to that of the cathode separator 100 of FIG. 1, except for the shape of the inlet header 240.
The inlet header 240 is recessed into the plate 210. The inlet header 240 may be formed by partially cutting out the surface of the plate 210 around the inlet 220 to a predetermined depth. The predetermined depth may be between about 1mm and about 2mm.
A top edge 241 of the inlet header 240 is formed at a predetermined angle to a top edge of the plate 210 toward the inlet 220. The angle may be optionally determined for allowing air introduced through the inlet 220 to be uniformly distributed to the channels 260 through the inlet header 240. In one embodiment, the angle may be between 30° and 45°.

The configuration of the inlet header 240 minimizes air resistance even though air flows away from the inlet 220, thereby supplying air uniformly to the channels 260. The configurations of the other components of the cathode separator 200 may be as described above with respect to those of the cathode separator 100 of FIG. 1, and the description of the configurations is omitted.

In the foregoing embodiments, the cathode separator includes the inlet header, the channel and the outlet header on one side of the plate, but not limited thereto. Alternatively, the inlet header, the channel and the outlet header may be formed on the other side of the plate. Such a separator having the inlet headers, the channels and the outlet headers on both sides of the plate is useful in stacking a plurality of unit cells.

In another embodiment, the above-mentioned structures of the outlet header, the rib and the inlet header can apply to an anode separator. In this case, unreacted hydrogen containing fuel, which has not participated in a chemical reaction of an anode electrode, of liquid hydrogen containing fuel supplied to the anode electrode through the channels formed on the anode separator can be smoothly discharged from the channel.

According to an embodiment, water produced in the cathode electrode is easily discharged. Thus, it is possible to supply air smoothly to the cathode electrode, thereby enhancing the power generation efficiency of the fuel cell.

## Claims

1. A separator for use in a fuel cell, comprising:
a plate (110, 210) having a first edge (141, 241, 341) and a second edge (151, 251, 351) opposite from the first edge (141, 241, 341);
an inlet (120, 220, 320) formed adjacent to the first edge (141, 241, 341);
an outlet (130,230,330) formed adjacent to the second edge (151, 251, 351); and
a plurality of ribs (161, 261, 361) formed on a surface of the plate (110, 210, 310), the ribs (161, 261, 361) being positioned between the inlet (120, 220, 320) and the outlet (130, 230, 330) and extending in a direction from the first edge (141, 241, 341) to the second edge (151, 251), thereby defining channels (160, 260, 360) therebetween, each of the ribs (161, 261, 361) comprising a first end portion adjacent to the inlet and a second end portion (161a, 261a, 361a) adjacent to the outlet, wherein the second end portions (161a, 261a, 361a) of the ribs (161, 261, 361) comprises at least one surface which does not extend parallel to a plane lying perpendicular to the direction in which the ribs (161, 261, 361) extend, **chatacterised in that** the at least one surface of the end portions of the ribs form an angle with the plane lying perpendicular to the direction, said angle being between 35° and 55° and in that the plate (110, 210) comprises a recess formed on the surface of the plate (110) and the plurality of ribs (161, 261) are formed within the recess, the recess comprising a first recessed portion (140, 240) permitting fluid communication between the inlet (120, 220) and the channels (160, 260) and a second recessed portion (150, 250) permitting fluid communication between the channels (160, 260) and the outlet (130, 230), and wherein the second recessed portion (150, 250) narrows toward the outlet (130, 230) such that a fluid from at least one of the channels (160, 260) flows toward the outlet (130, 230), the inlet (120, 220) being positioned higher than the outlet (130, 230), the second recessed portion comprising at least one surface substantially not parallel to the surface of the plate, and wherein the at least one surface of the second recessed portion is generally not parallel to the plane lying perpendicular to the direction, the at least one surface of the second recessed portion being substantially planar and forming an angle with the plane lying perpendicular to the direction, said angle being between 30° and 45°.

2. The separator of Claim 1, wherein the at least one of the second end portions (161a, 261a) comprises steps.

3. The separator of Claim 1, wherein the at least one of the second end portions (161 a, 261 a) comprises a lateral surface perpendicular to the surface of the plate (110, 210) and to the plane lying perpendicular to the direction in which the ribs (161, 261) extend, and wherein the at least one of the second end portions (161a) is tapered such that the lateral surface narrows toward the second edge (151, 251).

4. The separator of Claim 3, wherein the lateral surface narrows so as to sufficiently inhibit a liquid droplet from staying on the lateral surface while the liquid droplet travels in a direction from the first end portion to the second end portion (161a, 261 a) due to gravity.

5. The separator of Claim 3, wherein the lateral surface has a shape of a triangle with an apex pointing toward the second edge.

6. The separator of Claim 5, wherein the triangle comprises a perpendicular triangle.

7. The separator of Claim 1, wherein the first recessed portion (140, 240) widens as it extends from the inlet (120) toward the channels (160, 260).

8. The separator of Claim 1, wherein at least part of the second recessed portion (150, 250) is coated with a hydrophilic material.

9. The separator of Claim 1, wherein at least one of the channels (160, 260) is coated with a hydrophilic material.

10. The separator of Claim 1, further comprising another plurality of ribs (160, 260) formed on another surface of the plate (110, 210), the other plurality of ribs (160, 260) being positioned between the inlet (120, 220) and the outlet (130, 230) and extending in a direction from the first edge (141, 241) to the second edge (151, 251), thereby defining channels (160, 260) therebetween, each of the other plurality of ribs (161, 261) comprising a first end portion (140, 240) adjacent to the inlet and a second end portion (150, 250) adjacent to the outlet (130, 230), wherein at least one of the second end portions (150, 250) of the other plurality of ribs (161, 261) comprises at least one surface generally not parallel to a plane lying perpendicular to the direction in which the ribs (161) extend.

11. A fuel cell including a separator according to any preceding claim, the fuel cell comprising:
an electrode plate; and
the separator being attached to the electrode plate with the surface of the plate facing the electrode.

12. A fuel cell according to claim 11, comprising:
a second electrode plate (380); and
the separator being interposed between the first and second electrode plates and attached to the first and second electrode plates.

13. A fuel cell according to claim 11 or 12, incorporated into a self-contained fuel cell system, an electronic or electrical device or, a transportation vehicle.

14. A method of operating the fuel cell of claim 11 or 12, including the steps of orienting the fuel cell such that the inlet is positioned higher than the outlet;
supplying a reactant through the inlet;
activating the electrode to form a liquid product; and
draining the liquid product through the outlet.

## Patentansprüche

1. Ein Separator zur Verwendung in einer Brennstoffzelle, umfassend:
eine Platte (110, 210) mit einer ersten Kante (141, 241, 341) und einer zweiten Kante (151, 251, 351) gegenüber der ersten Kante (141, 241, 341);
einen neben der ersten Kante (141, 241, 341) ausgebildeten Einlass (120, 220, 320);
einen neben der zweiten Kante (151, 251, 351) ausgebildeten Auslass (130, 230, 330); und
eine Vielzahl von auf einer Oberfläche der Platte (110, 210, 310) ausgebildeten Rippen (161, 261, 361), wobei die Rippen (161, 261, 361) zwischen dem Einlass (120, 220, 320) und dem Auslass (130, 230, 330) positioniert sind und sich in eine Richtung von der ersten Kante (141, 241, 341) zu der zweiten Kante (151, 251) erstrecken und **dadurch** Kanäle (160, 260, 360) dazwischen definieren, wobei jede der Rippen (161, 261, 361) einen ersten Endteil neben dem Einlass sowie einen zweiten Endteil (161 a, 261 a, 3 61 a) neben dem Auslass umfasst, wobei die zweiten Endteile (161a, 261a, 361a) der Rippen (161, 261, 361) mindestens eine Oberfläche umfassen, die sich nicht parallel zu einer senkrecht zu der Richtung, in die sich die Rippen (161, 261, 361) erstrecken, liegenden Ebene erstreckt,
**dadurch gekennzeichnet, dass** die mindestens eine Oberfläche der Endteile der Rippen mit der senkrecht zu der Richtung liegenden Ebene einen Winkel bildet, wobei besagter Winkel zwischen 35° und 55° liegt, und dass die Platte (110, 210) eine auf der Oberfläche der Platte (110) ausgebildete Aussparung umfasst und die Vielzahl von Rippen (161, 261) innerhalb der Aussparung ausgebildet ist, wobei die Aussparung einen ersten ausgesparten Teil (140, 240), der Fluidverbindung zwischen dem Einlass (120, 220) und den Kanälen (160, 260) ermöglicht, sowie einen zweiten ausgesparten Teil (150, 250), der Fluidverbindung zwischen den Kanälen (160, 260) und dem Auslass (130, 230) ermöglicht, umfasst, wobei der zweite ausgesparte Teil (150, 250) in Richtung des Auslasses (130, 230) schmaler wird, so dass ein Fluid von mindestens einem der Kanäle (160, 260) in Richtung des Auslasses (130, 230) fließt, wobei der Einlass (120, 220) höher als der Auslass (130, 230) positioniert ist, wobei der zweite ausgesparte Teil mindestens eine zu der Oberfläche der Platte im Wesentlichen nicht parallele Oberfläche umfasst, wobei die mindestens eine Oberfläche des zweiten ausgesparten Teils allgemein nicht parallel zu der senkrecht zu der Richtung liegenden Ebene ist und wobei die mindestens eine Oberfläche des zweiten ausgesparten Teils im Wesentlichen eben ist und mit der senkrecht zu der Richtung liegenden Ebene einen Winkel bildet, wobei besagter Winkel zwischen 30° und 45° liegt.

2. Der Separator nach Anspruch 1, wobei der mindestens eine der zweiten Endteile (161a, 26 1 a) Stufen umfasst.

3. Der Separator nach Anspruch 1, wobei der mindestens eine der zweiten Endteile (16 1 a, 26 1 a) eine zu der Oberfläche der Platte (110, 210) und zu der zu der Richtung, in die sich die Rippen (161, 261) erstrecken, senkrecht liegenden Ebene senkrechte laterale Oberfläche umfasst und wobei der mindestens eine der zweiten Endteile (161a) derart verjüngt ist, dass die laterale Oberfläche in Richtung der zweiten Kante (151, 251) schmaler wird.

4. Der Separator nach Anspruch 3, wobei die laterale Oberfläche schmaler wird, um ein Flüssigkeitströpfchen ausreichend daran zu hindern, auf der lateralen Oberfläche zu verweilen, während sich das Flüssigkeitströpfchen aufgrund der Gravitation in eine Richtung von dem ersten Endteil zu dem zweiten Endteil (161a, 26 1 a) bewegt.

5. Der Separator nach Anspruch 3, wobei die laterale Oberfläche eine Form eines Dreiecks mit einer in Richtung der zweiten Kante zeigenden Spitze aufweist.

6. Der Separator nach Anspruch 5, wobei das Dreieck ein rechtwinkliges Dreieck umfasst.

7. Der Separator nach Anspruch 1, wobei der erste ausgesparte Teil (140, 240) breiter wird, während er sich von dem Einlass (120) in Richtung der Kanäle (160, 260) erstreckt.

8. Der Separator nach Anspruch 1, wobei mindestens ein Teil des zweiten ausgesparten Teils (150, 250) mit einem hydrophilen Material beschichtet ist.

9. Der Separator nach Anspruch 1, wobei mindestens einer der Kanäle (160, 260) mit einem hydrophilen Material beschichtet ist.

10. Der Separator nach Anspruch 1, ferner umfassend eine weitere Vielzahl von Rippen (160, 260), die auf einer weiteren Oberfläche der Platte (110, 210) ausgebildet ist, wobei die weitere Vielzahl von Rippen (160, 260) zwischen dem Einlass (120, 220) und dem Auslass (130, 230) positioniert ist und sich in eine Richtung von der ersten Kante (141, 241) zu der zweiten Kante (151, 251) erstreckt und **dadurch** Kanäle (160, 260) dazwischen definiert, wobei jede der weiteren Vielzahl von Rippen (161, 261) einen ersten Endteil (140, 240) neben dem Einlass sowie einen zweiten Endteil (150, 250) neben dem Auslass (130, 230) umfasst, wobei mindestens einer der zweiten Endteile (150, 250) der weiteren Vielzahl von Rippen (161, 261) mindestens eine zu einer senkrecht zu der Richtung, in die sich die Rippen (161) erstrecken, liegenden Ebene allgemein nicht parallele Oberfläche umfasst.

11. Eine Brennstoffzelle mit einem Separator gemäß irgendeinem vorhergehenden Anspruch, wobei die Brennstoffzelle umfasst:
eine Elektrodenplatte; und
wobei der Separator mit der Elektrodenplatte verbunden ist, wobei die Oberfläche der Platte der Elektrode zugewandt ist.

12. Eine Brennstoffzelle nach Anspruch 11, umfassend:
eine zweite Elektrodenplatte (380); und
wobei der Separator zwischen den ersten und zweiten Elektrodenplatten eingefügt ist und an den ersten und zweiten Elektrodenplatten befestigt ist.

13. Eine Brennstoffzelle nach Anspruch 11 oder 12, die in ein geschlossenes Brennstoffzellensystem, eine elektronische oder elektrische Vorrichtung oder ein Transportfahrzeug eingebunden ist.

14. Ein Verfahren zum Betreiben der Brennstoffzelle nach Anspruch 11 oder 12, das folgende Schritte beinhaltet:
Orientieren der Brennstoffzelle, so dass der Einlass höher als der Auslass positioniert ist;
Bereitstellen eines Reaktanten durch den Einlass;
Aktivieren der Elektrode zum Bilden eines flüssigen Produktes; und
Ableiten des flüssigen Produktes durch den Auslass.

## Revendications

1. Séparateur destiné à être utilisé dans une pile à combustible, comportant :
une plaque (110, 210) ayant un premier bord (141, 241, 341) et un second bord (151, 251, 351) opposé au premier bord (141, 241, 341) ;
une entrée (120, 220, 320) formée de façon à être adjacente au premier bord (141, 241, 341) ;
une sortie (130, 230, 330) formée de façon à être adjacente au second bord (151, 251, 351) ; et
de multiples nervures (161, 261, 361) formées sur une surface de la plaque (110, 210, 310), les nervures (161, 261, 361) étant positionnées entre l'entrée (120, 220, 320) et la sortie (130, 230, 330) et s'étendant dans une direction allant du premier bord (141, 241, 341) vers le second bord (151, 251), définissant ainsi entre elles des canaux (160, 260, 360), chacune des nervures (161, 261, 361) comportant une première partie extrême adjacente à l'entrée et une seconde partie extrême (161a, 261a, 361a) adjacente à la sortie, dans lequel les secondes parties extrêmes (161a, 261a, 361a) des nervures (161, 261, 361) présentent au moins une surface qui ne s'étend pas parallèlement à un plan s'étendant perpendiculairement à la direction dans laquelle les nervures (161, 261, 361) s'étendent, **caractérisé en ce que** la, au moins une, surface des parties extrêmes des nervures forme un angle avec le plan s'étendant perpendiculairement à la direction, ledit angle étant compris entre 35° et 55°, et **en ce que** la plaque (110, 210) présente un évidement formé sur la surface de la plaque (110) et les multiples nervures (161, 261) sont formées à l'intérieur de l'évidement, l'évidement comprenant une première partie évidée (140, 240) permettant une communication de fluide entre l'entrée (120, 220) et les canaux (160, 260) et une seconde partie évidée (150, 250) permettant une communication de fluide entre les canaux (160, 260) et la sortie (130, 230), et dans lequel la seconde partie évidée (150, 250) rétrécit vers la sortie (130, 230) de manière qu'un fluide provenant d'au moins l'un des canaux (160, 260) s'écoule vers la sortie (130, 230), l'entrée (120, 220) étant positionnée plus haut que la sortie (130, 230), la seconde partie évidée présentant au moins une surface qui n'est sensiblement pas parallèle à la surface de la plaque, et dans lequel la, au moins une, surface de la seconde partie évidée n'est généralement pas parallèle au plan s'étendant perpendiculairement à la direction, la, au moins une, surface de la seconde partie évidée étant sensiblement plane et formant un angle avec le plan s'étendant perpendiculairement à la direction, ledit angle étant compris entre 30° et 45°.

2. Séparateur selon la revendication 1, dans lequel la, au moins une, des secondes parties extrêmes (161a, 261a) comporte des épaulements.

3. Séparateur selon la revendication 1, dans lequel la, au moins une, des secondes parties extrêmes (161a, 261a) présente une surface latérale perpendiculaire à la surface de la plaque (110, 210) et au plan s'étendant perpendiculairement à la direction dans laquelle les nervures (161, 261) s'étendent et dans lequel la, au moins une, des secondes parties extrêmes (161a) est effilée de façon que la surface latérale rétrécisse vers le second bord (151, 251).

4. Séparateur selon la revendication 3, dans lequel la surface latérale rétrécit de façon à empêcher suffisamment une gouttelette de liquide de rester sur la surface latérale tandis que la gouttelette de liquide se déplace dans une direction allant de la première partie extrême vers la seconde partie extrême (161a, 261a) sous l'effet de la gravité.

5. Séparateur selon la revendication 3, dans lequel la surface latérale a la forme d'un triangle ayant un sommet tourné vers le second bord.

6. Séparateur selon la revendication 5, dans lequel le triangle est un triangle rectangle.

7. Séparateur selon la revendication 1, dans lequel la première partie évidée (140, 240) s'élargit en s'étendant de l'entrée (120) vers les canaux (160, 260).

8. Séparateur selon la revendication 1, dans lequel au moins une portion de la seconde partie évidée (150, 250) est revêtue d'une matière hydrophile.

9. Séparateur selon la revendication 1, dans lequel au moins l'un des canaux (160, 260) est revêtu d'une matière hydrophile.

10. Séparateur selon la revendication 1, comportant en outre une autre pluralité de nervures (160, 260) formée sur une autre surface de la plaque (110, 210), l'autre pluralité de nervures (160, 260) étant positionnée entre l'entrée (120, 220) et la sortie (130, 230) et s'étendant dans une direction allant du premier bord (141, 241) vers le second bord (151, 251), définissant ainsi entre elles des canaux (160, 260), chacune de l'autre pluralité de nervures (161, 261) comportant une première partie extrême (140, 240) adjacente à l'entrée et une seconde partie extrême (150, 250) adjacente à la sortie (130, 230), dans lequel au moins l'une des secondes parties extrêmes (150, 250) de l'autre pluralité de nervures (161, 261) présente au moins une surface qui n'est généralement pas parallèle à un plan s'étendant perpendiculairement à la direction dans laquelle les nervures (161) s'étendent.

11. Pile à combustible comprenant un séparateur selon l'une quelconque des revendications précédentes, ladite pile à combustible comportant :
une plaque d'électrode ; et
le séparateur fixé à la plaque d'électrode de façon que la surface de la plaque soit tournée face à l'électrode.

12. Pile à combustible selon la revendication 11, comportant :
une seconde plaque d'électrode (380) ; et
le séparateur interposé entre les première et seconde plaques d'électrodes et fixé aux première et seconde plaques d'électrodes.

13. Pile à combustible selon la revendication 11 ou 12, incorporée dans un système de pile à combustible autonome, un dispositif électronique ou électrique ou un véhicule de transport.

14. Procédé pour faire fonctionner la pile à combustible selon la revendication 11 ou 12, comprenant les étapes qui consistent à orienter la pile à combustible de façon que l'entrée soit positionnée plus haut que la sortie ;
à amener une matière réactionnelle à travers l'entrée ;
à activer l'électrode pour former un produit liquide ; et
à écouler le produit liquide à travers la sortie.
